# EUROPÄISCHE PATENTSCHRIFT

(11) **EP 4 067 677 B1**
(45) Veröffentlichungstag und Bekanntmachung des Hinweises auf die Patenterteilung: **14.08.2024**
(21) Anmeldenummer: 22162025.5
(22) Anmeldetag: 15.03.2022
(51) Int. Cl.: F16B 33/00, F16B 37/06, F16B 37/14

(54) **EINPRESSMUTTER SOWIE VERFAHREN ZUR HERSTELLUNG EINER EINPRESSMUTTER UND EINER EINPRESSVERBINDUNG**
PRESS-FIT NUT AND METHOD FOR MANUFACTURING A PRESS-FIT NUT AND A PRESS-FIT CONNECTION
ÉCROU À SERTIR AINSI QUE PROCÉDÉ DE FABRICATION D'UN ÉCROU À SERTIR ET D'UNE LIAISON PAR EMMANCHEMENT À FORCE

(30) Priorität: 29.03.2021 DE 102021203153
(43) Veröffentlichungstag der Anmeldung: 05.10.2022
(73) Patentinhaber: Richard Bergner Holding GmbH & Co. KG, 91126 Schwabach (DE)
(72) Erfinder: HIRSCHMANN, Markus, 91052 Erlangen (DE); GERSLER, Juliane, 91154 Roth-Eckersmühlen (DE); HEUBUSCH, Klaus, 91174 Spalt (DE)
(74) Vertreter: FDST Patentanwälte

(56) Entgegenhaltungen:
- WO-A1-2012/127640
- GB-A- 940 593
- US-A- 5 528 812
- US-A1- 2007 166 128

## Beschreibung

Die Erfindung betrifft eine vorkonfektionierte Einpressmutter, eine mit einer solchen vorkonfektionierten Einpressmutter hergestellte Einpressverbindung sowie weiterhin ein Verfahren zur Herstellung einer solchen vorkonfektionierten Einpressmutter sowie einer solchen Einpressverbindung.

Bei einer Einpressverbindung wird allgemein ein Einpresselement, speziell eine Einpressmutter in ein Bauteil aus Metall, speziell Blech eingepresst. An dieses wird in einem weiteren Montageverlauf ein weiteres Bauteil über eine Schraube befestigt, die in die Einpressmutter eingeschraubt wird. Die Einpressmutter weist häufig Verdrehsicherungselemente auf, sodass die Einpressmutter am Bauteil verdrehsicher gehalten ist. Weiterhin können solche Einpressmuttern einen Hinterschnitt aufweisen, um ein Auspressen aus dem Bauteil zu verhindern. Bei einigen Ausführungsvarianten sind dabei die Verdrehsicherungselemente als Rippen an der Unterseite der Einpressmutter ausgebildet.

Bei der hier beschriebenen Einpressmutter kann es sich um eine selbststanzende Einpressmutter handeln, welche beim Einpressvorgang selbst das erforderliche Loch im Bauteil einstanzt. Alternativ handelt es sich um ein vorgelochtes Bauteil und die Einpressmutter wird in das vorbereitete Loch eingepresst. Beim Einpressvorgang kann ein an der Unterseite der Einpressmutter ausgebildeter Befestigungskragen umgeformt werden, sodass mit dem Lochrand des Bauteils eine form- und/oder reibschlüssige Verbindung ausgebildet wird oder das Bauteil derart umgeformt wird, dass das Material vom Bauteil in einen Hinterschneidungsbereich der Einpressmutter fließt. Alternativ kann eine Einpressmutter auch mittels Aufstauchen des Kragens an dem Blech befestigt werden.

Einpresselemente, insbesondere Einpressmuttern sind beispielsweise in unterschiedlichen Varianten aus folgenden Schutzrechten der Anmelderin zu entnehmen: EP 3 430 277 B1, DE 10 2016 204 619 B4 sowie DE 10 2004 042 478 B4.

In einigen Anwendungsbereichen ist es erforderlich, dass die endmontierte Verbindung zwischen den beiden Bauteilen insbesondere im Bereich der Verbindungselemente Einpressmutter-Schraube im gewissen Rahmen mediendicht ist. An die Verbindungen zwischen Schraube und Einpressmutter bzw. Einpressmutter und Bauteil werden je nach Einsatzort im Fahrzeug unterschiedliche Dichtheitsanforderungen gestellt. So können Dichtheitsanforderungen gegen Flüssigkeiten wie Wasser, beispielsweise im Falle eines Wasserkanals im Bereich der Fahrzeugscheiben oder am Rahmen eines Schiebedachs oder Fahrzeugverdecks auftreten. Die Anforderungen variieren von dicht gegen Wasserspritzer bis zu dicht gegen Wassersäulen von z.B. 300 mm Wassersäule für eine Dauer von 30 Minuten. Ferner ist es von Vorteil, wenn eine Dichtheit auch gegen flüssige Lacke, wie sie beispielsweise im Beschichtungsprozess von Karosseriebauteilen eingesetzt werden, besteht oder auch gegen Öle. Dadurch kann auf aufwendige Reinigungs- und Nachbearbeitungsschritte nach dem Lackieren verzichtet werden.

Zusätzlich kann auch eine Dichtheit gegen Gase, wie beispielsweise Helium, Stickstoff oder Wasserstoff erforderlich sein. Solche Anwendungsfälle werden meist über eine maximale Leckrate definiert, beispielsweise 1 ml/min bei einem Luftdruck in der Umgebung von 1 bar. Bei Batteriekästen, wie sie nun immer häufiger in Elektrofahrzeugen verbaut werden, müssen einige Verbindungen flüssigkeits- und gasdicht sein.

Um diesen Anforderungen gerecht zu werden, ist es erforderlich, dass zum einen die Kontaktfläche zwischen Mutter und Bauteil mediendicht ist. Zum anderen ist es erforderlich, dass das Durchgangsloch der Mutter, in das die Schraube eingeschraubt wird, ebenfalls mediendicht verschlossen ist.

Eine Möglichkeit hierzu besteht darin, die Mutter nach Art einer Hutmutter auszubilden, bei der also das Durchgangsloch über eine insbesondere hutförmige Kappe verschlossen ist. Die Herstellung derartiger Hutmuttern ist teilweise aufwendig.

Häufig wird die Hutmutter aus zwei Teilstücken gefertigt. So ist beispielsweise gemäß der DE 103 07 786 B4 vorgesehen, auf einen Mutternkörper eine hutförmige Kappe aufzusetzen und diese mit dem Mutternkörper zu verschweißen. Durch das Verschweißen kommt es zu einer lokalen Wärmebehandlung der Mutter und der Kappe, so dass die mechanischen Eigenschaften lokal im Bereich der Schweißnaht im Vergleich zum Mutternkörper verändert werden. Daher müssen beim Schweißen aufwendige Vorkehrungen getroffen werden, so dass die mechanischen Eigenschaften im Gewindebereich der Mutter nicht durch die Wärmeeinwirkung beim Schweißen verschlechtert werden. Es können zusätzlich Nachbehandlungsschritte zum Entfernen von Schweißspritzern oder dem Richten von Verzug erforderlich sein.

Aus der GB 618 388 A ist ebenfalls eine aus zwei Teilen bestehende Hutmutter zu entnehmen, bei der der Mutternkörper einen Ringkragen aufweist, welcher umgebogen wird und dadurch ein Ringflansch der hutförmigen Kappe formschlüssig hält. Die hutförmige Kappe ist in diesem Fall aus Kunststoff ausgeführt und mit einer breiten ringförmigen Kontur an der Unterseite versehen. Um diese ringförmige Kontur wird der Ringkragen gelegt. Gleichzeitig fluchtet die Innenseite des Ringkragens mit dem Mutterngewinde und dient beim Einschrauben der Schraube als Gewindesicherung.

Aus der DE 4 239 583 C2 ist eine Einpressmutter zu entnehmen, bei der zum Verschließen des Durchgangsloches lediglich eine scheibenförmige Kappe vorgesehen ist, welches auf eine hochgezogene Schulter des Mutternkörpers aufgelegt wird und durch Umbiegen eines Ringkragens fixiert wird. Eine derartige Einpressmutter ist aufgrund der Schulter am Mutternkörper vergleichsweise schwer und teuer in der Herstellung.

Ähnliche Ausgestaltungen, bei denen das Durchgangsloch einer Mutter über eine Scheibe verschlossen ist, sind aus US 2007/0166128 A1, US 5 528 812 A oder GB 940 593 A zu entnehmen.

Um eine mediendichte Verbindung zwischen der Kappe und dem Mutternkörper durch Umformen eines Ringkragens zu erreichen, ist es erforderlich, dass der Ringkragen mit ausreichend hohen Kräften auf die Kappe aufgepresst wird, sodass also zwischen der Kappe und dem umgebogenen Ringkragen eine mediendichte Verbindung ausgebildet ist. Dies ist bei Einpressmuttern jedoch nicht ohne weiteres möglich, da sich an der Unterseite der Einpressmutter Elemente befinden, die der mechanischen Befestigung der Einpressmutter im Bauteil dienen, wie beispielsweise ein Stanzkragen, ein Nietkragen oder Rippen zur Verdrehsicherung. Aufgrund der hohen Kräfte, die beim mediendichten Verpressen des Ringkragens mit der Kappe entstehen können, würden diese beschriebenen Elemente an der Einpressmutter beschädigt werden.

Ausgehend hiervon liegt der Erfindung die Aufgabe zugrunde, eine mediendichte Einpressverbindung mit geringem Kosten- und Herstellungsaufwand zu ermöglichen.

Die Aufgabe wird gemäß der Erfindung gelöst durch eine vorkonfektionierte Einpressmutter, ein Verfahren zur Herstellung einer Einpressmutter, insbesondere einer vorkonfektionierten Einpressmutter sowie durch ein Verfahren zur Ausbildung einer solchen Einpressverbindung.

Die vorkonfektionierte Einpressmutter erstreckt sich in einer Axialrichtung und ist als Hutmutter sowie zum Einpressen in ein Bauteil ausgebildet. Die Einpressmutter ist dabei derart ausgebildet, dass sie in einem endkonfektionierten Zustand mediendicht ist, so dass sie für die Ausbildung einer mediendichten Einpressverbindung herangezogen werden kann. Sie weist einen Mutternkörper mit einem Durchgangsloch auf, in dem üblicherweise ein Innengewinde ausgebildet ist. Das Innengewinde ist in der Regel metrisch zwischen M3 und M16, kann aber auch mit abweichender Gewindesteigung (Feingewinde, Grobgewinde) oder abweichender Gewindeart (Zollgewinde) ausgeführt sein. Das Durchgangsloch ist in Axialrichtung unter Ausbildung eines Sackloches von einer Kappe verschlossen. Der Mutternkörper weist an einer Oberseite einen das Durchgangsloch umgebenden

Ringkragen auf. Dieser erstreckt sich zunächst in einem Ausgangszustand in Axialrichtung, ist also nach Art einer sich vertikal erstreckenden Ringhülse ausgebildet. Hervorzuheben ist, dass die Kappe bei der vorkonfektionierten Einpressmutter zunächst lediglich verliersicher über ein zumindest partielles Umbiegen des Ringkragens vorfixiert ist.

Gemäß einer ersten bevorzugten Variante ist der Ringkragen in Umfangsrichtung vollständig umlaufend umgebogen.

Gemäß einer zweiten bevorzugten Variante ist der Ringkragen in Umfangsrichtung lediglich an diskreten Stellen und damit partiell umgebogen, so dass die Kappe lediglich über einzelne Haltenasen vorfixiert ist. Der Ringkragen ist daher in Umfangsrichtung nur an einigen Position und nicht umlaufend umgebogen. Die einzelnen Haltenasen sind dabei durch partielles Umbiegen des zunächst hülsenförmigen Ringkragens ausgebildet. Die Haltenasen sind daher lediglich an diskreten Stellen durch Umbiegen ausgebildet und überdecken einen Randbereich der Kappe.

In beiden Varianten ist daher in einem ersten Prozessschritt lediglich eine Verliersicherung ausgebildet, so dass die Einpressmutter in einem vorkonfigurierten Zustand bereitgestellt ist. Bei dieser vorkonfigurierten Einpressmutter handelt es sich um eine handels- und transportfähige Einheit, die dafür vorgesehen ist, von einem Herstellort der Einpressmuttern z.B. von einem Hersteller der Einpressmuttern zu einem entfernten Montageort z.B. bei zu einem (anderen) Hersteller einer Einpressverbindung mit solchen Einpressmuttern gebracht zu werden. Dort wird die vorkonfektionierte Einpressmutter in ein Bauteil eingepresst.

Durch diese Ausgestaltung ist die vorkonfektionierte Einpressmutter kostengünstig speziell in Großserienfertigung herstellbar. Sie lässt sich dadurch auch bauraumoptimiert und mit geringem Gewicht ausführen. Zudem kann problemlos die Höhe der Kappe für unterschiedliche Anwendungen angepasst werden.

Die Einbringung der Einpressmutter in das Bauteil erfolgt beispielsweise in Großserienfertigung in einem Presswerk oder auch an Einzelstationen mit einer stationären oder mobilen Einpresseinheit. Die vorkonfektionierte Einpressmuttern mit der lediglich vorfixierten Kappe werden in der Regel in die Einpressposition gebracht. Hierzu werden die Einpressmuttern einzelweise beispielsweise über eine Sammelschiene und/oder über einen Zuführschlauch einer Bereitstellungsposition zugeführt.

Sofern vorliegend von "lediglich partiell" umgebogen oder "leicht" umgebogen gesprochen wird, so wird hierunter verstanden, dass
- die Kappe mit dem Mutternkörper keine mediendichte Verbindung ausbildet, und/oder
- die Kappe lose gehalten ist, also insbesondere noch ein Spiel zwischen dem umgebogenen Ringkragen und der Kappe vorliegt und / oder
- der Ringkragen nicht und insbesondere nicht vollständig umlaufend gegen die Kappe gepresst ist und / oder
- der Ringkragen - entwder um den gesamten Umfang oder auch nur an den diskret umgebogenen Haltenasen - lediglich schräg gegenüber einem Ringflansch der Kappe orientiert ist, d.h. der Ringkragen / die Haltenasen liegt nich planparallel auf dem Ringflansch auf.

Sofern vorliegend von mediendicht gesprochen wird, so wird hierunter eine flüssigkeitsdichte, insbesondere wasserdichte und / oder gasdichte, insbesondere luftdichte Verbindung zwischen der Kappe und dem Mutternkörper verstanden, wie sie beispielsweise eingangs für unterschiedliche Dichtigkeitsanforderungen erläutert wurde. Dadurch ist das Durchgangsloch kappenseitig mediendicht verschlossen.

Unter mediendicht werden allgemein unterschiedliche Dichtigkeitsklassen subsumiert. Sofern vorliegend von mediendicht gesprochen wird, so wird hierunter verstanden, dass zumindest die Dichtigkeitsklasse mit den geringsten Dichtigkeitsanforderungen und vorzugsweise auch eine der Dichtigkeitsklassen mit höheren Dichtigkeisanforderungen erfüllt ist, wie sie wie folgt definiert sind:
Dichtigkeitsklase mit geringsten Dichtigkeitsanforderungen: Verbindung zwischen Kappe und Mutternkörper ist wasserdicht (also kein Wasserdurchtritt durch die Verbindung) bei einer Wassersäule von zumindest 300mm und vorzugsweise von 1000 mm.

Dichtigkeitsklasse mit mittlerer Dichtigkeitsanforderung: Verbindung zwischen Kappe und Mutternkörper ist luftdicht (luftdicht: kein Durchtritt von Luft (Umgebungsluft oder Stickstoff), oder zumindest ist die Leckrate von Luft durch die Verbindung hindurch kleiner 1ml / min ) bei einem Differenzdruck zwischen den beiden Seiten der Verbindung von 1 bar (bei 20°C).

Dichtigkeitsklasse mit hoher Dichtigkeitsanforderung: Verbindung zwischen Kappe und Mutternkörper ist gasdicht gegenüber Wasserstoff (also kein Durchtritt von Wasserstoff, oder zumindest ist die Leckrate von Wasserstoff durch die Verbindung kleiner 1ml / min ) bei einem Differenzdruck zwischen den beiden Seiten der Verbindung von 1 bar (bei 20°C).

In einer bevorzugten Ausgestaltung genügt die Einpressmuttter der Dichtigkeitsklasse IP67, IP68 oder auch IP69 gemäß ISO 20653 ("Road vehicles - Degrees of protection (IP code) - Protection of electrical equipment against foreign objects, water and access").

In bevorzugter Ausgestaltung ist daher die Verbindung zwischen der Kappe und dem Ringkragen im vorkonfektionierten Zusatand nicht mediendicht, beispielsweise nicht luftdicht, gleichzeitig sind aber die Kappe und der Ringkragen durch ein Verpressen in eine mediendichte, insbesondere luftdichte Verbindung für den endkonfektionierten Zustand überführbar.

Bei dem erfindungsgemäßen Verfahren zur Herstellung einer solchen vorkonfektionierten Einpressmutter wird der Mutternkörper auf einen Gegenhalter aufgesetzt, anschließend wird die Kappe auf dem Mutternkörper, insbesondere auf eine Schulter, also eine Auflagefläche für einen Ringflansch der Kappe aufgelegt. Danach wird der Ringkragen zumindest partiell, also je nach Variante vollständig ringförmig oder nur partiell umgebogen und zwar derartig, dass die Kappe lediglich verliersicher beispielsweise über die Haltenasen bei der zweiten Variante fixiert ist. Eine mediendichte Verbindung ist hierbei noch nicht ausgebildet.

Das Umbiegen erfolgt in einem ersten Prozess- oder Umformschritt mit einem geeigneten Fixierstempel. Dieser weist - je nach Variante - einen ringförmigen oder einen zinnenförmigen Stempelkragen auf. Bei der ersten Variante wird der Ringkragen ringförmig umlaufend umgebogen und bei der zweiten Variante wird der Ringkragen lediglich um den Umfang verteilt an einzelnen diskreten Stellen umgebogen, sodass die Haltenasen ausgebildet werden, um die Kappe formschlüssig zu halten.

Zur Ausbildung der fertigen, insbesondere mediendichten Einpressmutter ist allgemein ein zweiter Prozess- oder Umformschritt erforderlich, bei dem der Ringkragen vollständig umlaufend gegen die Kappe gepresst wird. Hierzu wird insbesondere ein zweites Werkzeug herangezogen, welches nicht der Fixierstempel ist. Bevorzugt wird beim ersten Umformvorgang von dem Fixierstempel eine erste Umformkraft ausgeübt und beim zweiten Umformvorgang - insbesondere ein Einpressvorgang - wird eine zweite Umformkraft ausgeübt, welche größer ist als die erste Umformkraft.

Mit einer solchen vorkonfektionierten Einpressmutter wird eine

Einpressverbindung ausgebildet. Diese ist dadurch gekennzeichnet, dass der Ringkragen vollständig umgebogen ist und vollständig umlaufend auf die Kappe aufgepresst und die Mutter in das Bauteil eingepresst ist. Nachdem bei der vorkonfektionierten Einpressmutter lediglich der Ringkragen leicht umgebogen war, bzw. partielle Haltenasen ausgebildet waren, ist nunmehr der Ringkragen vollständig umgebogen und gegen die Kappe gepresst, insbesondere derart, dass eine mediendichte Verbindung ausgebildet ist. Bei der zweiten Variante mit den Haltenasen sind daher auch die zuvor noch sich im Wesentlichen in Axialrichtung erstreckenden Zwischensegmente des Ringkragens umgebogen. Der gesamte Ringkragen ist umlaufend auf die Kappe aufgepresst.

In bevorzugter Ausgestaltung, die nicht zur Erfindung gehört, ist daher eine mediendichte Verbindung zwischen der Kappe und dem Ringflansch und damit dem Mutternkörper ausgebildet. Bei der vorkonfektionierten Einpressmutter besteht demgegenüber noch keine mediendichte Verbindung zwischen dem Ringkragen und der Kappe.

Dieses Lösungskonzept beruht auf der Überlegung, die Verbindung zwischen Kappe und Mutternkörper auf zwei Prozessschritte zu verteilen, wobei erst im zweiten Prozessschritt die Mediendichtigkeit erzeugt wird. Dies hat den besonderen Vorteil, dass im ersten Prozessschritt, bei der lediglich eine verliersichere Vorfixierung zwischen Mutternkörper und Kappe ausgebildet wird, vergleichsweise geringe Umformkräfte auszuüben sind, sodass eine Beschädigung der speziellen Elemente, insbesondere von Rippen, an der Unterseite des Mutternkörpers zuverlässig vermieden ist.

Speziell bei der Anordnung von Rippen und des Stanzkragens bzw. des Nietkragens an der Unterseite des Mutternkörpers zur Verdrehsicherung bzw. zur Auspresssicherung, ist es erforderlich, dass diese beim Fixiervorgang des Ringkragens nicht beschädigt werden. Um eine solche Beschädigung zu vermeiden, die bei hohen Fixierkräften im Falle eines lediglich einstufigen Fixiervorgangs auftreten würden, müsste daher ein Gegenhalter, auf dem der Mutternkörper beim Fixiervorgang aufliegt, Ausnehmungen für derartige Rippen aufweisen. Zudem müsste der Mutternkörper in eine definierte Drehorientierung gebracht werden, sodass die Rippen in die Ausnehmungen eingreifen. Sowohl die Bereitstellung eines derartigen speziell ausgebildeten Gegenhalters und insbesondere die exakte Drehausrichtung der Einpressmutter ist jedoch sehr aufwändig und kostenintensiv. Bei dem hier beschriebenen Vorgehen zur Ausbildung der vorkonfektionierten Einpressmutter ist daher gerade keine spezielle Drehorientierung erforderlich. Bevorzugt weist weiterhin auch der Gegenhalter eine glatte Auflagefläche auf, auf der die Einpressmutter mit ihrer Unterseite, also auf den Rippen bzw. dem Niet- / Stauch- / Stanz-/ Einpress-/Außenkragen aufliegt. Ferner können auch mehrere dieser vorstehend genannten Befestigungsmerkmale auf dem Gegenhalter aufliegen.

Unter vorkonfektionierte Einpressmutter wird vorliegend allgemein die Einpressmutter als solche verstanden, also als loses Bauelement vor dem Einpressen in das Bauteil.

Die Kappe ist in bevorzugter Ausgestaltung als eine hutförmige Kappe ausgebildet, welche einen Ringflansch aufweist, mit dem sie auf einer korrespondierenden Schulter des Mutternkörpers aufliegt. Die Kappe ist bevorzugt dünnwandig ausgeführt, um Gewicht zu sparen. Die Herstellung der Kappe erfolgt über Großserienverfahren wie Tiefziehen von Metallblech oder Spritzgießen von Kunststoff.

Allgemein weist der Mutternkörper eine Unterseite zur Auflage auf dem Bauteil auf. An dieser Unterseite sind in bevorzugter Ausgestaltung Rippen zur Verdrehsicherung ausgebildet. Diese erstrecken sich typischerweise in radialer Richtung. Sie erstrecken sich vorzugsweise bis zum äußersten Rand des Mutternkörpers. Alternativ ist am äußersten Rand der Unterseite ein umlaufender Außenkragen ausgebildet und die Rippen erstrecken sich bis zu diesem Außenkragen. Der Au-ßenkragen selbst liegt bei der Einpressverbindung auf der Oberfläche des Bauteils auf oder dringt nur minimal in die Bauteiloberfläche ein. Der Mutternkörper weist weiterhin allgemein an seiner Unterseite einen umlaufenden Befestigungskragen auf, welcher zur Befestigung der Einpressmutter im Bauteil vorgesehen ist. Dieser Befestigungskragen kann beim Einpressvorgang und zur Ausbildung der Einpressverbindung verformt werden. Hierbei sind unterschiedliche Varianten bekannt. Alternativ erfolgt lediglich ein Verpressen des Befestigungskragens innerhalb des Bauteils und/oder ein radiales Aufweiten, ohne dass jedoch der Befestigungskragen über die Unterseite des Bauteils übersteht.

In bevorzugter Ausgestaltung ist der Ringkragen auf der Oberseite des Mutternkörpers zur Befestigung der Kappe lediglich leicht umgebogen, entweder vollständig umlaufend oder nur an einigen Stellen um den Umfang verteilt, so dass lediglich die verliersichere Vorfixierung erreicht ist. Typischerweise ist hierzu beispielsweise der Ringkragen oder sind die Haltenasen lediglich schräg verlaufend zum Ringflansch orientiert.

Der Fixiervorgang zur Ausbildung der Vorfixierung ist derart ausgebildet, dass lediglich eine geringe Fixierstempelkraft und damit Umformkraft insbesondere ringförmig auf den Ringkragen mittels des Fixierstempels aufgebracht wird. Dabei wird der Ringkragen leicht radial nach innen gebogen, insbesondere derart, dass der Ringkragen mit dem Ringflansch der Kappe einen in Axialrichtung wirksamen Formschluss zur Verliersicherung auszubildet, vorzugsweise ohne dass der Ringkragen zum Aufliegen auf den Ringflansch kommt oder gegen diesen gepresst ist.

Bei der Ausgestaltung mit den Haltenasen sind diese zur Befestigung der Kappe an der Mutternoberseite umgebogen, vorzugsweise ohne dass sie von verbleibenden Zwischensegmenten des Ringkragens zwischen zwei benachbarten Haltenasen abgeschert sind, auch nicht teilweise. Der Fixiervorgang zur Ausbildung der Haltenasen ist daher derart ausgebildet, dass eine Beschädigung des Ringkragens vermieden ist. Es erfolgt also kein Einreisen und es werden auch keine Risse im Ringkragen ausgebildet. Nach dem Ausbilden der Haltenasen ist der Ringkragen daher durch die horizontal orientierten Haltenasen und dazwischen angeordneten Zwischensegmente gebildet, die vertikal oder schräg zur Axialrichtung orientiert sind. Die horizontalen Haltenasen und die Zwischensegmente gehen kontinuierlich ineinander über.

Insgesamt ist damit nach der Ausformung der Haltenasen ein vorzugsweise in etwa wellenförmiger, jedenfalls kontinuierlich umlaufender Ringkragen ausgebildet.

Bevorzugt sind um den Umfang verteilt 3-10 Haltenasen ausgebildet. Die Haltenasen sind vorzugsweise gleichmäßig verteilt um den Umfang angeordnet. Weiterhin überstreicht eine jeweilige Haltenase vorzugsweise lediglich einen Winkelbereich von 10° bis 25° oder auch von 10° bis maximal 40°.

Insgesamt wird durch die vergleichsweise kleinen Haltenasen und den großen Zwischensegmenten erreicht, dass nur geringe Fixierkräfte erforderlich sind. Die benötigte Umformkraft und damit die Fixierstempelkraft, also die vom Fixierstempel ausgeübte Kraft zur Vorfixierung der Kappe im ersten Prozessschritt ist vergleichsweise gering und liegt vorzugsweise zwischen 5kN und 30 kN. Da die Fixierstempelkraft so gering ist, erfolgt keine Beschädigung an der Unterseite der Einpressmutter und es werden auch keine Risse im Ringkragen ausgebildet. Nach der verliersicheren Vorfixierung steht also der Ringkragen oder stehen die Haltenasen bevorzugt nur leicht radial nach innen, so dass die Kappe vor einem Herausfallen aus der Mutternoberseite gesichert ist.

Bevorzugt liegt die im zweiten Prozessschritt ausgeübte zweite Umformkraft deutlich höher, beispielsweise um zumindest den Faktor 2 oder zumindest den Faktor 5 oder auch um den Faktor 10 höher als die im ersten Prozessschritt ausgeübte Umformkraft. Bevorzugt liegt die zweite Umformkraft im Bereich zwischen 35kN und 350 kN.

Der zweite Prozessschritt erfolgt dabei bevorzugt erst bei der Ausbildung der Einpressverbindung. Hierbei wird der Ringkragen mit einem Pressstempel im zweiten Prozessschritt weiter umgebogen und gegen die Kappe gepresst.

Bei der Ausbildung der Einpressverbindung ist zusammenfassend hervorzuheben, dass die mediendichte Verbindung bevorzugt erst beim Einpressvorgang ausgebildet wird.

In bevorzugter Ausgestaltung erfolgt das Aufpressen des Ringkragens auf die Kappe also gleichzeitig mit dem Einpressen der Mutter in das Bauteil. Dies bedeutet, dass mit einem Einpressstempel, mit dem die Einpressmutter in das Bauteil eingepresst wird, gleichzeitig auch der Ringkragen vollständig auf die Kappe aufgepresst wird. Die vom Einpressstempel ausgeübte (Einpress-) Kraft zum Einpressen der Einpressmutter in das Bauteil bildet daher die zweite Umformkraft. Sie wird insbesondere zumindest teilweise und vorzugsweise ausschließlich über einen Pressring des Einpressstempels übertragen, mit dem zugleich der Ringkragen auf die Kappe dicht aufgepresst wird. Dies bietet den Vorteil, dass die Kappe nicht beschädigt wird und für unterschiedliche hohe Kappen der gleiche Einpressstempel verwendet werden kann. Weiterhin ist hervorzuheben, dass die von dem Einpressstempel ausgeübte Einpressstempelkraft höher ist, als die vom Fixierstempel ausgeübte Fixierstempelkraft, die zur Ausbildung der verliersicheren Vorfixierung bzw. der Haltenasen ausgeübt wird. Typischerweise liegen die Einpresskräfte zwischen 35kN und 350kN.

Das hier beschriebene Konzept ist allgemein geeignet für Einpressmuttern jeglicher Ausbildung. Sowohl für selbststanzende Muttern als auch für Einpressmuttern, die in Löcher eines vorgelochten Bauteils eingepresst werden. Einpressmuttern mit Stanzfunktion werden bei Bauteilen ohne Vorloch eingesetzt. Der Mutternkörper hat an der Unterseite Rippen und einen Befestigungskragen mit Stanzkante. Beim Einpressen in das Bauteil stanzt die Einpressmutter das Vorloch selbst. Solche Einpressmuttern können an der Unterseite sowohl mit Außenkragen, als auch ohne Außenkragen ausgeführt sein. Die Variante ohne Außenkragen kann zusätzlich mit einem Verdrängersteg zwischen Befestigungskragen und Rippen ausgeführt sein. Bei solchen selbststanzenden Einpressmuttern ist die Matrize mit einer Matrizenfügekontur ausgeführt, welche ringförmig erhaben, an der Oberseite angeordnet ist. Ferner weisen solche Matrizen ein Durchgangsloch zur Abfuhr des Stanzbutzens auf. Neben Bauteilen ohne Vorloch können Einpressmuttern des zuvor beschriebenen Typs auch in Bauteile mit Vorloch eingepresst werden. In diesem Fall bleibt der Befestigungskragen ohne Stanzfunktion. Die Befestigung einer nicht selbststanzenden Einpressmutter in ein vorgelochtes Bauteil, erfolgt entweder durch Umformung eines Kragens (Nietmutter), radiales Aufweiten eines Kragens (insbesondere bei hoch- und höchstfesten Stählen mit Zugfestigkeiten zwischen 600 N/mm² und 2.000 N/mm²) oder durch Umformung des Bauteils in Hinterschneidungsbereiche der Mutter insbesondere beim Einsatz in Aluminiumlegierungen, Kupferlegierungen oder Stählen mit Zugfestigkeiten kleiner 600 N/mm². Es handelt sich um Muttern aus Stahl mit einer definierten Festigkeitsklasse, die in der Regel die mechanischen Festigkeitseigenschaften nach DIN EN ISO 898-2 erfüllen. Für Anwendungen in Aluminium, Magnesium oder Kupfer können die Muttern auch aus Aluminium sein.

Die Kappe ist dünnwandig und gewichtssparend ausgelegt. Sie ist entweder aus Stahlblech mit einer Wandstärke zwischen 0,3 - 1,0 mm, vorzugsweise 0,5 mm oder aus Kunststoff ausgeführt. Das Stahlblech kann z.B. mittels eines Tiefziehprozess in die Kappenform gebracht werden. Das Stahlblech ist aus Korrosionsschutzgründen in der Regel beschichtet, vorzugsweise verzinkt. Der Vorteil dieser Kappen ist, dass die Vorfixierung der bereits gegen Korrosion geschützten Kappe auf einer mit Zinkoberfläche beschichteten Stahlmutter erfolgt und der nachträglich sehr aufwendige Beschichtungsprozess in einen einseitig geschlossenen Hohlkörper entfällt. Des Weiteren ist es natürlich möglich, sowohl Kappe als auch Mutter nachträglich zu beschichten. Für die Kunststoffausführung der Kappe bietet sich z.B. Spritzgießen als Herstellverfahren an.

Die Kappe kann kostengünstig und einfach in unterschiedlichen Höhen ausgeführt werden. Dadurch können schnell und einfach unterschiedliche Varianten an vorkonfektionierten Einpressmuttern hergestellt werden, indem auf den gleichen Mutternkörpern, Kappen unterschiedlicher Höhe vorfixiert werden. Durch eine höhere Kappe können später z.B. längere Schrauben in die Mutter eingeschraubt werden ohne dass die Mediendichtheit beeinträchtigt wird.

Ein Ausführungsbeispiel der Erfindung wird nachfolgend anhand der Figuren näher erläutert. Diese zeigen in teilweise vereinfachten Darstellungen
- Fig 1: eine Schnittansicht einer Einpressmutter mit Mutternkörper und aufgesetzter Kappe vor dem Fixiervorgang zur verliersicheren Fixierung der Kappe,
- Fig 2: eine Schnittansicht einer ringförmig vorkonfektionierten Einpressmutter nach dem Fixiervorgang,
- Fig 3: eine dimetrische Ansicht einer ringförmig vorkonfektionierten Einpressmutter,
- Fig 4: eine Seitenansicht einer vorkonfektionierten Einpressmutter mit Haltenasen
- Fig 5: eine dimetrische Ansicht einer vorkonfektionierten Einpressmutter mit Haltenasen,
- Fig 6: eine Schnittansicht einer Einpressmutter nach einem zweiten Umformvorgang, bei der zwischen der Kappe und dem Mutternkörper eine mediendichte Verbindung ausgebildet ist,
- Fig 7: eine Schnittansicht mit der Einpressmutter ähnlich FIG 1 und einem Fixierstempel sowie einem Gegenhalter zur Erläuterung des ersten Prozessschrittes des Fixierens der Kappe,
- Fig 8A-8E: verschiedene Darstellungen zur Erläuterung des Verfahrens zur Herstellen der vorkonfektionierten Einpressmutter,
- Fig 9A-9C: verschiedene Darstellungen zur Erläuterung des Verfahrens zur Herstellung der Einpressverbindung sowie
- Fig 10A-E: verschiedene Einpressmuttern.

In den Figuren sind gleich wirkende Bauteile mit den gleichen Bezugszeichen versehen.

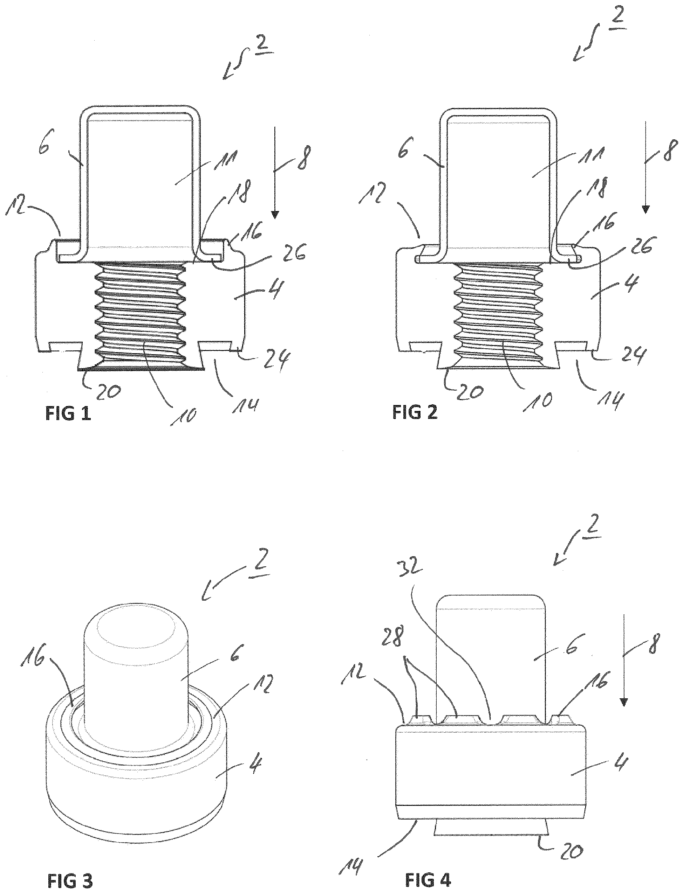

Eine in den Figuren 1-5 dargestellte, vorkonfektionierte Einpressmutter 2 ist als Hutmutter ausgebildet. Sie weist einen Mutternkörper 4 sowie eine mit diesem verbundenen Kappe 6 auf, welches im Ausführungsbeispiel als eine hutförmige Kappe 6 ausgebildet ist.

Die Einpressmutter 2 erstreckt sich in Axialrichtung 8 von einem oberen Ende zu einem unteren Ende. Der Mutternkörper 4 weist ein Durchgangsloch 10 auf, welches mit einem Innengewinde versehen ist. Durch die Kappe 6 ist das Durchgangsloch nach oben entgegen der Axialrichtung 8 begrenzt und es ist ein Sackloch 11 ausgebildet.

Der Mutternkörper 4 erstreckt sich in Axialrichtung 8 von einer Oberseite 12 zu einer Unterseite 14. An der Oberseite 12 ist stirnseitig am Mutternkörper 4 ein Ringkragen 16 ausgebildet, welcher im Ausgangszustand vertikal und damit parallel zur Axialrichtung 8 orientiert ist. An der Oberseite 12 ist umlaufend um das Durchgangsloch 10 eine umlaufende Schulter 18 ausgebildet, die sich bis zum Ringkragen 16 erstreckt.

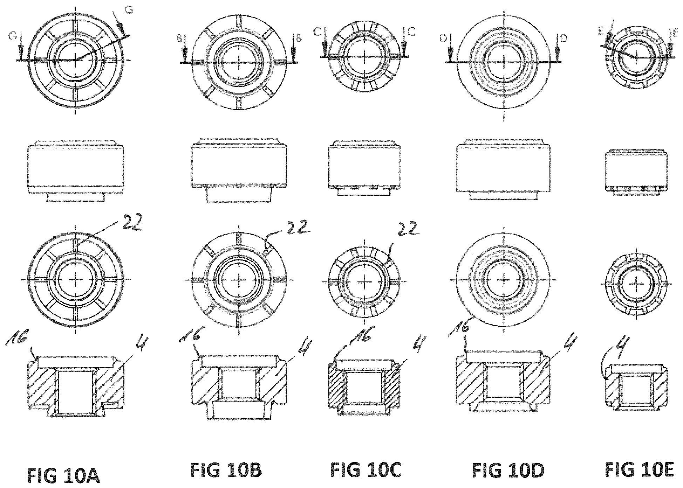

An der Unterseite 14 sind ein Befestigungskragen 20 sowie als Verdrehsicherungselemente Rippen 22 vorhanden. Die Rippen 22 können auch den Figuren 10A-10C , 10E entnommen werden. Weiterhin ist im Ausführungsbeispiel am äußersten Umfangsrand an der Unterseite 14 ein umlaufender Außenkragen 24 ausgebildet. Die Rippen 22 erstrecken sich in radialer Richtung ausgehend vom Befestigungskragen 20 bis zum Außenkragen 24. Im Ausführungsbeispiel sind die Rippen 22 um den Umfang gleichmäßig verteilt angeordnet. Typischerweise sind etwa 4-12 Rippen 22 und im Ausführungsbeispiel 8 Rippen 22 ausgebildet. Deren Höhe in Axialrichtung 8 ist vorzugsweise geringer als die des Außenkragens 24.

Die Kappe 6 weist allgemein einen Ringflansch 26 auf, der durchgehend umlaufend ausgebildet ist. Dieser liegt im vorkonfektionierten Zustand auf der Schulter 18 des Mutternkörper 4 auf. Die Kappe 6 weist im Ausführungsbeispiel einen zylindrischen Körper auf, welcher an seiner oberen Seite über einen Bodenabschnitt verschlossen ist. Am gegenüberliegenden Ende ist der Ringflansch 26 ausgebildet. Dieser ist in horizontaler Richtung orientiert.

Bei dem Mutternkörper 4 und der Kappe 6 handelt es sich um zwei zunächst lose Bauelemente, die zur Ausbildung der vorkonfektionierten Einpressmutter 2 miteinander verbunden werden. Die Kappe 6 wird hierbei an dem Mutternkörper 4 über den Ringkragen 16 verliersicher gehalten. Dieser ist insbesondere kreisringförmig ausgebildet und erstreckt sich, vor dem Fixiervorgang, entgegen der Axialrichtung 8.

Zur verliersicheren Fixierung der Kappe 6 in einem ersten Prozessschritt wird der Ringkragen 16 entweder ringförmig oder partiell mit Hilfe eines Fixierstempels 40 und einer von diesem ausgeübten ersten Umformkraft 41 (Fixierstempelkraft) umgebogen.

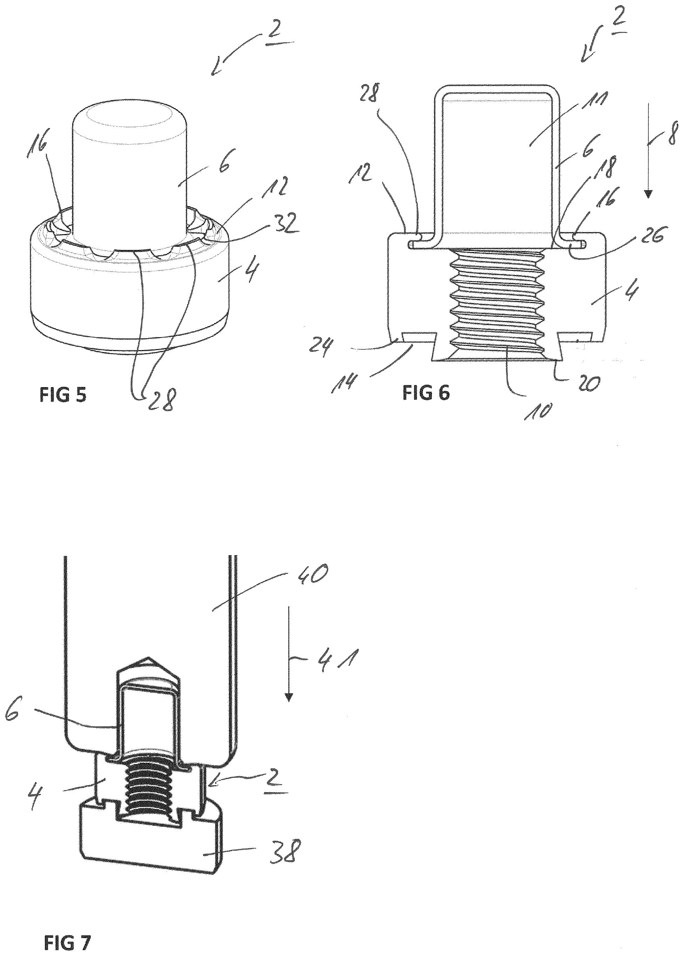

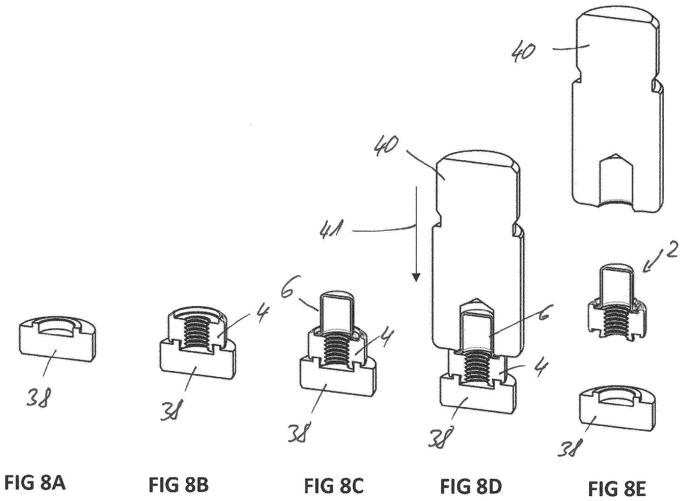

Gemäß der ersten Variante wird der Ringkragen 16 beim Fixiervorgang aus dem Ausgangszustand über den gesamten Ringkragen 16 mittels des Fixierstempels 40 und der ersten Umformkraft 41 radial nach innen gedrückt (vgl. hierzu FIG 7 und FIG 8D). Durch diesen Fixiervorgang seht der Ringkragen 16 nun leicht über dem Außendurchmesser des Ringflansch 26 der Kappe 6 und hält somit die Kappe 6 verliersicher am Mutternkörper 4.

Gemäß der zweiten Variante wird der Ringkragen 16 beim Fixiervorgang lediglich partiell umgebogen. Dadurch werden Haltenasen 28 ausgebildet. Die Kappe 6 ist an dem Mutternkörper 4 über diese Haltenasen 28 verliersicher gehalten. Diese sind insbesondere gleich verteilt um den Umfang herum angeordnet. Zwischen zwei benachbarten Haltenasen 28 ist jeweils ein Zwischensegment 32 ausgebildet. Im Bereich des Zwischensegments 32 ist anders als bei den Haltenasen 28 typischerweise keine formschlüssige Sicherung der Kappe 6 ausgebildet. Die Zwischensegmente 32 liegen nicht auf dem Ringflansch 26 auf und überlappen diesen vorzugsweise auch nicht. Die Haltenasen 28 werden durch den Fixiervorgang (erster Umformvorgang, erster Prozessschritt) ausgebildet, bei dem aus dem im Ausgangszustand vertikal orientierten Ringkragen 16 Teilbereiche nach unten umgebogen werden, welche die Haltenasen 28 ausbilden.

Bei dieser derart vorkonfektionierten Einpressmutter 2 ist daher die Kappe 6 verliersicher am Mutternkörper 4 befestigt. Zwischen der Kappe 6 und dem Mutternkörper 4 ist jedoch noch keine mediendichte Verbindung ausgebildet.

Eine derartig vorkonfektionierte Einpressmutter 2 wird in einem ersten Prozessschritt bereitgestellt und typischerweise zur weitergehenden Montage in einem zweiten Prozessschritt an einen entfernten Montageort geliefert.

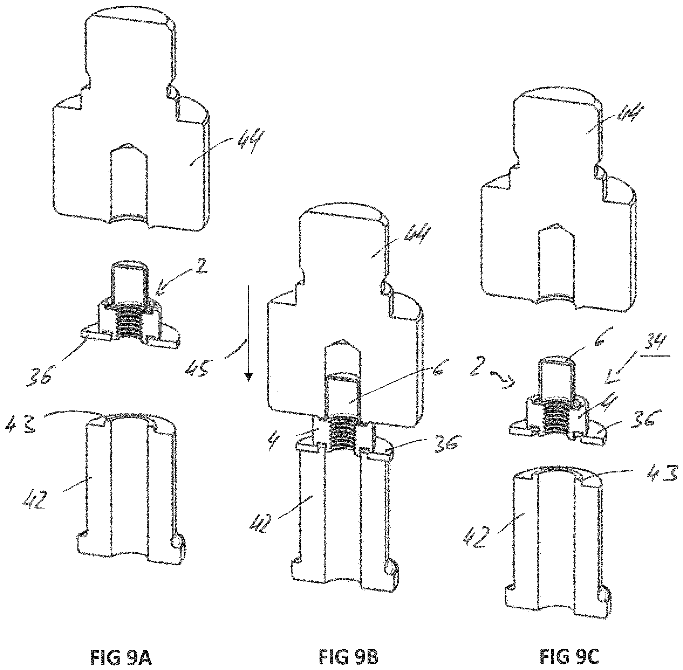

Mit einer derartig vorkonfektionierten Einpressmutter 2 wird im zweiten Prozessschritt eine Einpressverbindung 34 (vgl. Fig. 9C) zwischen der Einpressmutter 2 und einem Bauteil 36 insbesondere aus Metall ausgebildet, bei dem es sich insbesondere um ein Blechbauteil handelt, ferner sind auch Metallgussteile und Extrusionsprofile denkbar.

Diese Einpressverbindung 34 zeichnet sich im endgefertigten Zustand dadurch aus, dass der Ringkragen 16 vollständig umlaufend auf den Ringflansch 26 der Kappe 6 aufgepresst ist (vgl. Fig. 6), sodass eine mediendichte Verbindung speziell zwischen Ringkragen 16 und Ringflansch 26 ausgebildet ist. Der Ringflansch 26 ist daher zwischen der Schulter 18 und dem Ringkragen 16 eingepresst. Dies bedeutet, dass im endgefertigten Zustand kein Medium über das Durchgangsloch 10 hindurchtreten kann, da dieses durch das Sackloch 11 nunmehr mediendicht verschlossen ist.

Die beiden Prozessschritte zur Ausbildung einerseits der vorkonfektionierten Einpressmutter 2 und andererseits der Einpressverbindung 34 werden anhand der Figuren 6, 7, sowie 8A bis 8E und 9A bis 9C näher erläutert.

Im ersten Prozessschritt zur Ausbildung der vorkonfektionierte Einpressmutter 2 wird zunächst der Mutternkörper 4 auf einen Gegenhalter 38 aufgelegt. Dieser weist eine Oberseite mit einer oberen Gegen- oder Auflagefläche auf, welche durch einen ringförmigen Kragen ausgebildet ist. Dieser ringförmige Kragen greift dabei im Ausführungsbeispiel in den Zwischenraum zwischen Befestigungskragen 20 und umlaufenden Außenkragen 24 ein. Von besonderer Bedeutung ist, dass diese Auflagefläche also die Stirnfläche des Gegenhalters 38 glatt ausgebildet ist. Die einzelnen Rippen 22 liegen daher auf dieser glatten Auflagefläche auf. Ferner ist es auch möglich, dass der Gegenhalter 38 nur eine glatte Auflagefläche aufweist mit einer zentralen Ausnehmung, in die der Befestigungskragen 20 eintauchen kann.

Im nächsten Schritt wird die Kappe 6 auf den Mutternkörper 4 aufgelegt. Mithilfe des Fixierstempels 40 und der ersten Umformkraft 41 wird anschließend der Ringkragen 16 radial, kreisringförmig, leicht nach innen gedrückt, um die Kappe 6 verliersicher am Mutternkörper 4 zu halten (FIG 2, 3).

Alternativ werden selektiv die einzelnen Haltenasen 28 ausgebildet. Der Fixierstempel 40 weist hierzu in hier nicht näher dargestellter Weise an seiner Unterseite um den Umfang verteilt Stempelnasen auf, die also in Axialrichtung 8 nach unten hervorstehen. Diese sind vorzugsweise zu ihren Randseiten (in Umfangsrichtung) hin abgerundet und nicht scharfkantig ausgebildet, sodass beim Fixiervorgang die Haltenasen 28 sowie die Zwischensegmente 32 ausgebildet werden, ohne dass der Ringkragen 16 reist und beschädigt wird. Nach diesem Fixiervorgang ist die in den Figuren 4 und 5 dargestellte Einpressmutter 2 erhalten.

Zur Ausbildung der Einpressverbindung 34, wie sie insbesondere zu den Figuren 9A bis 9C erläutert wird, wird in dem zweiten Prozessschritt wie folgt vorgegangen:
Das Bauteil 36, im Ausführungsbeispiel ein vorgelochtes Blech, wird auf eine Matrize 42 aufgelegt. Die Matrize 42 weist im Ausführungsbeispiel eine nach oben orientierte Fügekontur 43 auf. Diese weist einen ringförmigen Steg auf, welcher von einer flachen, ringförmigen Auflagefläche umgeben ist, auf der das Bauteil 36 aufgelegt wird. Anschließend wird die Einpressmutter 2 von oben aufgesetzt und mithilfe eines Einpressstempels 44 in das Bauteil 36 mit einer zweiten (Umform-) Kraft 45, vorliegend auch als Einpresskraft bezeichnet, eingepresst. Innerhalb einer (einzigen) Pressstufe erfolgt dabei sowohl die übliche Verformung des Befestigungskragens 20 zur Ausbildung der Verbindung mit dem Bauteil 36. Hierbei werden auch die Rippen 22 zur Verdrehsicherung in die Oberseite des Bauteils 36 eingepresst.

Gleichzeitig wird bei diesem Einpressvorgang der Ringkragen 16 vollständig gegen den Ringflansch 26 der Kappe 6 gepresst. Durch die vom Einpressstempel 44 ausgeübten zweiten Umformkraft 45 wird der Ringkragen 16 derart gegen den Ringflansch 26 gepresst, sodass zwischen Kappe 6, Ringflansch 26 sowie zwischen Ringkragen 16 und Schulter 18 eine mediendichte Verbindung geschaffen wird. Dies bedeutet bei der Variante mit Haltenasen 28, dass zum einen die Zwischensegmente 32 umgebogen werden und dass andererseits sowohl die Zwischensegmente 32 als auch die vorbereiteten Haltenasen 28 mit der vom Einpressstempel 44 aufgebrachten zweiten (Einpress- ) Kraft 45 gegen den Ringflansch 26 der Kappe 6 gepresst wird, wodurch die mediendichte Verbindung ausgebildet ist. Der Einpressstempel 44 kann zusätzlich mit einer zusätzlichen Formschräge ausgebildet sein, die die mediendichte Umformung des Ringkragens 16 sicherstellt (siehe Figur 9A - 9C).

In den Figuren 10A bis 10E sind unterschiedliche Einpressmuttern dargestellt, die exemplarisch, aber nicht abschließend für das erfindungsgemäße Konzept verwendbar sind.

Die Fig. 10A bis 10E zeigen dabei jeweils - von oben nach unten - eine Draufsicht auf die Unterseite der Einpressmutter 2 mit Darstellung einer Schnittebene, eine Seitenansicht, nochmals die Draufsicht auf die Unterseite sowie eine Schnittansicht entlang der in der obersten Bilddarstellung gezeigten Schnittebene.

Einpressmuttern 2 mit Stanzfunktion, wie sie in Fig. 10A und 10E gezeigt sind, können in ein Bauteil ohne Vorloch eingepresst werden. Der Mutternkörper 4 hat an der Unterseite 14 Rippen 22 und einen Befestigungskragen 20 mit Stanzkante. Beim Einpressen in das Bauteil stanzt die Einpressmutter 2 das Vorloch selbst.

Die Einpressmutter 2 mit Stanzfunktion kann an der Unterseite 14 sowohl mit Au-ßenkragen 24 als auch ohne Außenkragen ausgeführt sein. Die Variante ohne Außenkragen kann zusätzlich mit einem Verdrängersteg zwischen Befestigungskragen 20 und Rippen 22 ausgeführt sein.

Die Matrize 42 für die Einpressmuttern 2 mit Stanzfunktion hat an der Oberseite die Matrizenfügekontur 43, die ringförmig erhaben ausgeführt ist. Innerhalb der ringförmig erhabenen Matrizenfügekontur 43 ist ein Durchgangsloch zur Abfuhr des Stanzbutzens bei selbststanzender Verarbeitung der Einpressmutter 2.

Neben Bauteilen ohne Vorloch können Einpressmuttern 2 dieses Typs auch in Bauteile mit Vorloch eingepresst werden. In diesem Fall bleibt der Befestigungskragen 20 ohne Stanzfunktion.

Üblicherweise werden diese Einpressmuttern 2 in Bauteilen aus Stahl, Aluminium, Kupfer oder Magnesium eingepresst.

Einpressmuttern 2 mit Nietfunktion, wie sie in Fig.10B-10C gezeigt sind, werden in ein Bauteil mit Vorloch eingepresst. Der Mutternkörper 4 hat an der Unterseite 14 Rippen 22 und einen Befestigungskragen 20. Der Befestigungskragen 22 wird während des Einpressens in das Bauteil in Richtung Lochrand umgebogen. Üblicherweise steht der Befestigungskragen 22 nach dem Umbiegen nicht an der Unterseite des Bauteils über.

Die Matrize 42 für die Einpressmuttern 2 mit Nietfunktion hat an der Oberseite eine Matrizenfügekontur 43 in Form eines Kegelstumpfes.

Üblicherweise werden diese Einpressmuttern 2 in Bauteilen aus Stahl, Aluminium, Kupfer oder Magnesium eingepresst.

Einpressmuttern 2 mit Stauchkragen, wie in Fig. 10D gezeigt, werden in ein Bauteil mit Vorloch eingepresst. Dabei wird der Befestigungskragen 20 an der Unterseite 14 des Mutternkörpers 4 während des Einpressens in das Bauteil mittels Druckumformung in Richtung Lochrand gepresst, so dass sich eine Presspassung zwischen druckumgeformten Stauchkragen und hochfestem Stahlbauteil ergibt. Verdrehsicherungsmerkmale in Form von Rippen oder Rändel sind bei dieser Mutternvariante nicht vorgesehen.

Die Matrize 42 für die Einpressmuttern 2 mit Nietfunktion hat an der Oberseite eine Matrizenfügekontur 43 in Form eines Kegelstumpfes.

Üblicherweise werden diese Einpressmuttern 2 in Bauteilen aus Stahl mit einer Zugfestigkeit größer als 600 N/mm² bis zu 2000 N/mm² eingepresst. Hochfest bezeichnet in diesem Fall Stähle mit einer Zugfestigkeit größer als 600 N/mm², insbesondere größer 1000 N/mm² bis zu 2000 N/mm². Der Einsatz kann sowohl in kalt- als auch warmumgeformten Stählen erfolgen.

### Bezugszeichenliste

- 2: Einpressmutter
- 4: Mutternkörper
- 6: Kappe
- 8: Axialrichtung
- 10: Durchgangsloch
- 11: Sackloch
- 12: Oberseite
- 14: Unterseite
- 16: Ringkragen
- 18: Schulter
- 20: Befestigungskragen
- 22: Rippen
- 24: Außenkragen
- 26: Ringflansch
- 28: Haltenasen
- 30: Winkelabschnitt
- 32: Zwischensegment
- 34: Einpressverbindung
- 36: Bauteil
- 38: Gegenhalter
- 40: Fixierstempel
- 41: erste Umformkraft (Fixierstempelkraft)
- 42: Matrize
- 43: Fügekontur
- 44: Einpressstempel
- 45: zweite Umformkraft (Einpressstempelkraft)

## Patentansprüche

1. Vorkonfektionierte Einpressmutter (2), welche sich in einer Axialrichtung (8) erstreckt und als eine Hutmutter sowie zum Einpressen in ein Bauteil (36) ausgebildet ist und die einen Mutternkörper (4) mit einem Durchgangsloch (10) aufweist, welches unter Ausbildung eines Sackloches (11) von einer Kappe (6) verschlossen ist, wobei der Mutternkörper (4) an einer Oberseite (12) einen Ringkragen (16) aufweist, **dadurch gekennzeichnet, dass** der Ringkragen (16) lediglich partiell umgebogen ist, derart dass die Kappe (6) am Mutternkörper (4) lediglich verliersicher gehalten ist.

2. Vorkonfektionierte Einpressmutter (2) nach dem vorhergehenden Anspruch, bei der die Verbindung zwischen Kappe (6) und Ringkragen (16) nicht mediendicht ist, gleichzeitig aber Kappe (6) und Ringkragen (16) durch ein Verpressen in eine mediendichte Verbindung in einem endkonfektionierten Zustand überführbar sind.

3. Vorkonfektionierte Einpressmutter (2) nach einem der vorhergehenden Ansprüche, bei der der Ringkragen (16) zur Ausbildung der Verliersicherung lediglich an diskreten Stellen zur Ausbildung von Haltenasen (28) umgebogen ist.

4. Vorkonfektionierte Einpressmutter (2) nach einem der vorhergehenden Ansprüche, bei der die Kappe (6) hutförmig ausgebildet ist und einen Ringflansch (26) aufweist, mit dem sie auf dem Mutternkörper (4) aufliegt und der vom Ringkragen (16) gehalten ist.

5. Vorkonfektionierte Einpressmutter (2) nach einem der vorhergehenden Ansprüche, bei der der Mutternkörper (4) eine Unterseite (14) zur Auflage auf dem Bauteil (36) aufweist, wobei an der Unterseite (14) Rippen (22) zur Verdrehsicherung ausgebildet sind.

6. Vorkonfektionierte Einpressmutter (2) nach einem der vorhergehenden Ansprüche und nach Anspruch 3, bei der zwischen benachbarten Haltenasen (28) jeweils ein Zwischensegment (32) des Ringkragens (16) ausgebildet ist, wobei die Haltenasen (28) von diesen Zwischensegmenten (32) nicht abgeschert sind, wobei die Haltenasen (28) und die Zwischensegmente (32) insbesondere jeweils kontinuierlich ineinander übergehen.

7. Vorkonfektionierte Einpressmutter (2) nach einem der vorhergehenden Ansprüche und nach Anspruch 3, bei der um den Umfang insbesondere gleichmäßig verteilt 3 bis 10 Haltenasen (28) ausgebildet sind.

8. Verfahren zur Herstellung einer Einpressmutter (2) insbesondere nach einem der Ansprüche 1 bis 7, wobei die Einpressmutter (2) einen Mutternkörper (4) mit einem Durchgangsloch (10) und einen dieses umgebenden Ringkragen (16) aufweist, und weiterhin eine Kappe (6) zum Aufsetzen auf den Mutternkörper (4), die insbesondere zum mediendichten Verschließen des Durchgangsloches (10) vorgesehen ist, wobei die Kappe (6) auf den Mutternkörper (4) aufgelegt wird und anschließend in einem ersten Prozessschritt zur Ausbildung eines vorkonfektionierten Zustands der Einpressmutter (2) der Ringkragen (16) lediglich partiell umgebogen wird, derart dass die Kappe (6) am Mutternkörper (4) lediglich verliersicher gehalten ist.

9. Verfahren nach dem vorhergehenden Anspruch, bei dem im ersten Prozessschritt der Ringkragen (16) im Umfangsrichtung lediglich partiell an diskreten Stellen mit Hilfe eines Fixierstempels (40) zur Ausbildung von Haltenasen (28) umgebogen wird.

10. Verfahren nach einem der beiden vorhergehenden Ansprüche, bei dem der Gegenhalter (38) eine glatte Auflagefläche aufweist, auf der die Einpressmutter (2) mit ihrer Unterseite (14) aufliegt.

11. Verfahren nach einem der Ansprüche 8 bis 10, bei dem im ersten Prozessschritt eine Umformkraft im Bereich von 5kN bis 30kN aufgebracht wird

12. Verfahren nach einem der Ansprüche 8 bis 11, bei dem insbesondere zur Ausbildung einer mediendichten Verbindung zwischen dem Mutternkörper (4) und der Kappe (6) in einem zweiten Prozessschritt der Ringkragen (16) vollständig umlaufend gegen die Kappe (6) gepresst wird, wobei bevorzugt im ersten Prozessschritt eine erste Umformkraft und im zweiten Prozessschritt eine zweite Umformkraft ausgeübt wird, wobei die zweite Umformkraft größer als die erste Umformkraft ist.

13. Verfahren zur Herstellung einer Einpressverbindung (34), bei dem eine vorkonfektionierte Einpressmutter (2) in ein Bauteil (36) eingepresst wird, wobei
- die vorkonfektionierte Einpressmutter (2) sich in einer Axialrichtung (8) erstreckt und als eine Hutmutter ausgebildet ist und einen Mutternkörper (4) mit einem Durchgangsloch (10) aufweist, welches unter Ausbildung eines Sackloches (11) von einer Kappe (6) verschlossen ist, wobei der Mutternkörper (4) an einer Oberseite (12) einen Ringkragen (16) aufweist und im vorkonfektionierten Zustand der Einpressmutter (2) der Ringkragen (16) lediglich partiell umgebogen ist, derart dass die Kappe (6) am Mutternkörper (4) lediglich verliersicher gehalten ist,
- zum Einpressen dieser vorkonfektionierten Einpressmutter (2) der Ringkragen (16) mit Hilfe eines Einpressstempels (44) vollständig umlaufend gegen die Kappe (6) gepresst wird.

14. Verfahren nach dem vorhergehenden Anspruch, bei dem der Ringkragen (16) beim Einpressen der Einpressmutter (2) in das Bauteil (36) gegen die Kappe (6) gepresst wird.

## Claims

1. Prefabricated press-fit nut (2) which extends in an axial direction (8) and is designed as a capped nut and for press-fitting in a component (36) and which has a nut body (4) with a through-bore (10) which, while forming a blind bore (11), is closed by a cap (6), wherein the nut body (4) has an annular collar (16) on an upper side (12), **characterized in that** the annular collar (16) is only partially bent over in such a manner that the cap (6) is only captively held on the nut body (4).

2. Prefabricated press-fit nut (2) according to the preceding claim, in which the connection between the cap (6) and the annular collar (16) is not media-tight, but at the same time the cap (6) and the annular collar (16) are able to be transformed to a final fabricated state by compression so as to form a media-tight connection.

3. Prefabricated press-fit nut (2) according to one of the preceding claims, in which the annular collar (16) for forming the captive safeguard is only bent over at discrete locations so as to form holding lugs (28).

4. Prefabricated press-fit nut (2) according to one of the preceding claims, in which the cap (6) is designed to be hat-shaped and has an annular flange (26) by way of which said cap (6) rests on the nut body (4) and which is held by the annular collar (16) .

5. Prefabricated press-fit nut (2) according to one of the preceding claims, in which the nut body (4) has a lower side (14) for resting on the component (36), wherein ribs (22) for anti-rotation protection are formed on the lower side (14).

6. Prefabricated press-fit nut (2) according to one of the preceding claims and according to Claim 3, in which one intermediate segment (32) of the annular collar (16) is formed in each case between adjacent holding lugs (28), wherein the holding lugs (28) are not sheared off by these intermediate segments (32), wherein the holding lugs (28) and the intermediate segments (32) in particular transition in each case continuously into one another.

7. Prefabricated press-fit nut (2) according to one of the preceding claims and according to Claim 3, in which three to ten holding lugs (28) are in particular formed so as to be distributed uniformly about the circumference.

8. Method for producing a press-fit nut (2), in particular according to one of Claims 1 to 7, wherein the press-fit nut (2) has a nut body (4) with a through-bore (10) and an annular collar (16) surrounding the latter, and furthermore a cap (6), which is provided in particular for closing the through-bore (10) in a media-tight manner, for attaching to the nut body (4), wherein the cap (6) is placed on the nut body (4) and subsequently, in a first process step for forming a prefabricated state of the press-fit nut (2), the annular collar (16) is only partially bent over in such a manner that the cap (6) is only captively held on the nut body (4).

9. Method according to the preceding claim, in which in the first process step the annular collar (16) is only partially bent over in the circumferential direction with the aid of a fixing punch (40) at discrete locations so as to form holding lugs (28).

10. Method according to one of the two preceding claims, in which the counter-holder (38) has a smooth bearing face on which the press-fit nut (2) rests by way of the lower side (14) of the latter.

11. Method according to one of Claims 8 to 10, in which in the first process step a forming force in the range from 5 kN to 30 kN is applied.

12. Method according to one of Claims 8 to 11, in which in a second process step the annular collar (16) is pressed against the cap (6) in a fully encircling manner in particular so as to form a media-tight connection between the nut body (4) and the cap (6), wherein a first forming force is preferably exerted in the first process step, and a second forming force is exerted in the second process step, wherein the second forming force is greater than the first forming force.

13. Method for producing a press-fit connection (34), in which method a prefabricated press-fit nut (2) is press-fitted in a component (36), wherein
- the prefabricated press-fit nut (2) extends in an axial direction (8) and is designed as a capped nut and has a nut body (4) with a through-bore (10) which, while forming a blind bore (11), is closed by a cap (6), wherein the nut body (4) has an annular collar (16) on an upper side (12), and in the prefabricated state of the press-fit nut (2) the annular collar (16) is only partially bent over in such a manner that the cap (6) is only captively held on the nut body (4),
- for press-fitting this prefabricated press-fit nut (2), the annular collar (16) is pressed against the cap (6) in a completely encircling manner with the aid of a press-fit punch (44).

14. Method according to the preceding claim, in which the annular collar (16) is pressed against the cap (6) when press-fitting the press-fit nut (2) in the component (36).

## Revendications

1. Écrou à sertir (2) préconfectionné, qui s'étend dans une direction axiale (8) et est conçu sous la forme d'un écrou borgne ainsi que pour le sertissage dans une pièce (36) et qui présente un corps d'écrou (4) avec un trou traversant (10) qui est fermé par un capuchon (6) pour former un trou borgne (11), le corps d'écrou (4) présentant un collet annulaire (16) sur une face supérieure (12), **caractérisé en ce que** le collet annulaire (16) est seulement partiellement replié, de sorte que le capuchon (6) est seulement maintenu sur le corps d'écrou (4) de manière imperdable.

2. Écrou à sertir (2) préconfectionné selon la revendication précédente, dans lequel la liaison entre le capuchon (6) et le collet annulaire (16) n'est pas étanche aux fluides, mais dans lequel le capuchon (6) et le collet annulaire (16) sont aptes à être simultanément transformés par un pressage, dans un état de confection finale, en une liaison étanche aux fluides.

3. Écrou à sertir (2) préconfectionné selon l'une des revendications précédentes, dans lequel le collet annulaire (16) est replié uniquement à des endroits séparés pour former des ergots de retenue (28) afin de réaliser la sécurité anti-perte.

4. Écrou à sertir (2) préconfectionné selon l'une des revendications précédentes, dans lequel le capuchon (6) est réalisé en forme de chapeau et présente une bride annulaire (26) par laquelle il repose sur le corps d'écrou (4) et qui est maintenue par le collet annulaire (16) .

5. Écrou à sertir (2) préconfectionné selon l'une des revendications précédentes, dans lequel le corps d'écrou (4) présente une face inférieure (14) destinée à reposer sur la pièce (36), des nervures (22) étant formées sur la face inférieure (14) pour empêcher toute rotation.

6. Écrou à sertir (2) préconfectionné selon l'une des revendications précédentes et selon la revendication 3, dans lequel un segment intermédiaire (32) du collet annulaire (16) est respectivement formé entre des ergots de retenue (28) voisins, les ergots de retenue (28) n'étant pas cisaillés par ces segments intermédiaires (32), les ergots de retenue (28) et les segments intermédiaires (32) se raccordant en particulier respectivement de manière continue.

7. Écrou à sertir (2) préconfectionné selon l'une des revendications précédentes et selon la revendication 3, dans lequel de 3 à 10 ergots de maintien (28) sont formés, notamment répartis de manière régulière sur la périphérie.

8. Procédé de fabrication d'un écrou à sertir (2), en particulier selon l'une des revendications 1 à 7, l'écrou à sertir (2) présentant un corps d'écrou (4) avec un trou traversant (10) et un collet annulaire (16) entourant celui-ci, et en outre un capuchon (6) à poser sur le corps d'écrou (4), qui est prévu en particulier pour fermer le trou traversant (10) de manière étanche aux fluides, le capuchon (6) étant posé sur le corps d'écrou (4) et le collet annulaire (16) étant ensuite, dans une première étape du procédé, replié seulement partiellement pour former un état préconfectionné de l'écrou à sertir (2), de telle sorte que le capuchon (6) est seulement maintenu sur le corps d'écrou (4) de manière imperdable.

9. Procédé selon la revendication précédente, dans lequel, dans la première étape du procédé, le collet annulaire (16) est replié dans le sens périphérique uniquement partiellement en des endroits séparés en utilisant un poinçon de fixation (40) pour former des ergots de retenue (28).

10. Procédé selon l'une des deux revendications précédentes, dans lequel le contre-appui (38) présente une surface d'appui lisse sur laquelle l'écrou à sertir (2) repose par sa face inférieure (14).

11. Procédé selon l'une des revendications 8 à 10, dans lequel une force de déformation de l'ordre de 5KN à 30kN est appliquée dans la première étape du procédé.

12. Procédé selon l'une des revendications 8 à 11, dans lequel, en particulier pour former une liaison étanche aux fluides entre le corps d'écrou (4) et le capuchon (6), le collet annulaire (16) est pressé sur toute sa circonférence contre le capuchon (6) au cours d'une deuxième étape du procédé, une première force de déformation étant de préférence exercée au cours de la première étape du procédé et une deuxième force de déformation étant exercée au cours de la deuxième étape du procédé, la deuxième force de déformation étant supérieure à la première force de déformation.

13. Procédé de fabrication d'un assemblage (34) à emmanchement par force, dans lequel un écrou à sertir (2) préconfectionné est emmanché dans un pièce (36), dans lequel
- l'écrou à sertir (2) préconfectionné s'étend dans une direction axiale (8) et est conçu comme un écrou borgne et présente un corps d'écrou (4) avec un trou traversant (10) qui est fermé par un capuchon (6) pour former un trou borgne (11), le corps d'écrou (4) présentant sur une face supérieure (12) un collet annulaire (16) et, à l'état préconfectionné de l'écrou à sertir (2), le collet annulaire (16) n'étant que partiellement replié, de sorte que le capuchon (6) est maintenu sur le corps d'écrou (4) uniquement de manière imperdable,
- pour l'emmanchement de cet écrou à sertir (2) préconfectionné, le collet annulaire (16) est pressé complètement sur tout le pourtour contre le capuchon (6) en utilisant un poinçon d'emmanchement (44).

14. Procédé selon la revendication précédente, dans lequel le collet annulaire (16) est pressé contre le capuchon (6) lors de l'emmanchement de l'écrou à sertir (2) dans la pièce (36).
